# EUROPEAN PATENT SPECIFICATION

(11) **EP 1 664 520 B1**
(45) Date of publication and mention of the grant of the patent: **07.03.2007**
(21) Application number: 04766537.7
(22) Date of filing: 18.08.2004
(51) Int. Cl.: F02M 25/08, B60K 15/035

(54) **A FILTER DEVICE FOR FILTERING FUEL VAPOURS GENERATED IN THE TANK OF A MOTOR VEHICLE**
FILTERVORRICHTUNG ZUM FILTERN VON IM TANK EINES KRAFTFAHRZEUGS ERZEUGTEN KRAFTSTOFFDÄMPFEN
DISPOSITIF DE FILTRE DESTINE A FILTRER DES VAPEURS DE CARBURANT GENEREES DANS LE RESERVOIR D'UN VEHICULE A MOTEUR

(30) Priority: 19.08.2003 IT TO20030641
(43) Date of publication of application: 07.06.2006
(73) Proprietor: Dayco Fluid Technologies S.p.A., 10123 Torino (IT)
(72) Inventor: DEFILIPPI, Roberto, Via Torino 71, I-10060 Airasca (IT)
(74) Representative: Jorio, Paolo
(86) International application number: PCT/EP2004/051837
(87) International publication number: WO 2005/017340

(56) References cited:
- WO-A-88/09867
- US-A- 4 919 103
- US-B1- 6 182 693
- PATENT ABSTRACTS OF JAPAN vol. 1998, no. 01, 30 January 1998 (1998-01-30) & JP 09 242622 A (SUZUKI MOTOR CORP), 16 September 1997 (1997-09-16)

## Description

### TECHNICAL FIELD

The present invention relates to a filter device for the fuel vapours generated inside the tank of a motor vehicle.

Such devices set the tank in communication with the external environment and compensate for both depression due to tank emptying when fuel is supplied to the internal-combustion engine and the pressurization caused by the evaporation of the fuel. In the latter case, filter devices have the job of retaining the fuel vapours, which are inflammable and harmful to health, preventing them from being dispersed into the environment.

### BACKGROUND ART

There are known filter devices which comprise a casing set inside the tank, a liquid separator, and an activated-carbon filter, arranged in series inside the casing and communicating, respectively, with the tank and with the external environment.

The activated-carbon filter acts on the gaseous mix of air and fuel vapours, and adsorbs the latter. However, if it is reached by liquid particles, it becomes contaminated, so losing large part of its depurating properties. The liquid separator generally comprises a pipe in which the actual separation of the particles of liquid from the fuel vapours takes place, and a sump for accumulating the separated particles of liquid, which is set at the end of the pipe and communicates with the activated-carbon filter.

In use, particles of fuel may enter the casing as a result of shaking due to sharp driving manoeuvres or rough terrain, and enter the pipe of the separator; these particles adhere to the walls of the aforesaid pipe, and deposit by gravity in the sump.

Filter devices are frequently equipped with a washing circuit, which has the purpose of increasing their effectiveness and their working life. In these circuits, a valve selectively sets the accumulation sump in communication with the intake manifold of the engine, whose inside pressure is lower than ambient pressure. When the valve opens, an air flow coming from the external environment is generated, which traverses the filter in counterflow, cleans it, and is then conveyed into the intake manifold. Fuel vapours contained in the washing air flow influence the dosing level of the of air/fuel mixture fed to the IC engine cylinders, but this can be corrected by means of a control unit.

US-A-6182693 discloses a filter device including a liquid separator having a sump and a draining valve to drain the liquid accumulated in the sump back into the tank.

The filter devices described above present certain drawbacks.

In particular, the fuel head inside the sump may lap and saturate the filter, reducing its depurating capacity, when the motor vehicle is travelling along rough roads or is inclined, for example on account of a stop on a slope.

Since a saturated filter has reduced depurating capacity, it would be necessary to resort frequently to washing cycles to clean it, thus complicating considerably the task of the control unit in the management of the dosing levels. The result is in any case a reduction in the depurating power of the filter device.

### DISCLOSURE OF INVENTION

The purpose of the present invention is to provide a filter device that will be free from the drawbacks described above.

The aforesaid purpose is achieved by the present invention in so far as it relates to a filter device as defined in Claim 1.

### BRIEF DESCRIPTION OF THE DRAWINGS

For a better understanding of the present invention, there is now described a preferred embodiment thereof, purely by way of non-limiting example and with reference to the annexed drawings, in which:
- Figure 1 is a schematic view of the filter device according to the present invention; and
- Figure 2 illustrates an enlarged detail of Figure 1.

### BEST MODE FOR CARRYING OUT THE INVENTION

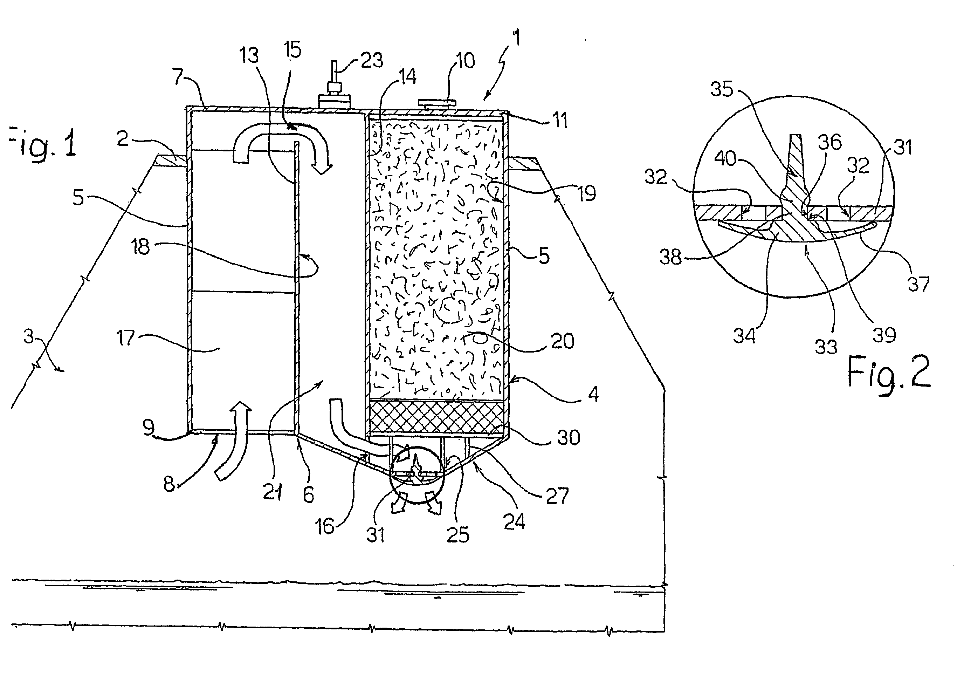

In Figure 1, designated as a whole by 1 is a filter device for a fuel tank 2 of a motor vehicle. The fuel level in the tank, as is known, is controlled automatically by an overfilling-prevention (OFP) system, which enables maximum filling below the theoretical capacity of the tank itself, so that a limited reserve space 3 between the free surface of the fuel and a top portion of the tank 2 always remains.

The filter device 1 comprises a box-like casing 4 set in an appropriate compartment in the reserve space 3 and having: side walls 5 (only two of which are shown in the attached figure); a bottom wall 6 set in a position generally higher than the level of fuel in the tank 2; and a top wall 7 facing towards the external environment, for example defined by a portion of the tank 2 itself. The casing 4 communicates with the reserve space 3 by means of an inlet opening 8 made on the bottom wall 6 in the proximity of an edge 9 thereof, and with the external environment by means of a vent 10 that opens on the top base 7 in the proximity of a second edge 11 thereof, opposite to the first edge 9 of the bottom base 6. The bottom base 6 consequently defines an interface element between the tank 2 and the filter device 1.

The casing 4 internally comprises a first vertical wall 13 and a second vertical wall 14, extending parallel to one another and to two opposed side walls 5, between the inlet opening 8 and the vent 10.

The walls 13 and 14 consequently identify, inside the casing 4, three spaces communicating with one another by means of a first opening 15 of the wall 13 set in the proximity of the top wall 7 and a second opening 16 of the wall 14 set in the proximity of the bottom base 6. In particular, the wall 13 delimits, towards the side wall 5 that faces it, an inlet chamber 17, which communicates via the inlet opening 8 with the tank 2 and contains safety devices, which are not described in greater detail herein in so far as they do not form part of the present invention, such as for example the OFP safety device and possibly a roll-over safety device, which prevents the fuel from coming out of the vent 10 when a vehicle turns over. The wall 14 identifies, towards the side wall 5 that faces it, a seat 19, which communicates with the external environment by means of the vent 10 and is designed to house an activated-carbon filter 20. The walls 13, 14 moreover delimit between them a conduit 18, which forms part of a liquid separator 21 and may be connected, by means of a valve 23, to a washing circuit in itself known and not described further herein in so far as it does not form part of the present invention.

The bottom base 6 has a relief portion 24 facing towards the free surface of the fuel inside the tank 2, which substantially has the shape of a truncated pyramid defining a storage sump 25 located below the conduit 18 and the seat 19. A plurality of projections 27 extend from the portion 24 of the bottom wall 6 and have the function of supporting the filter 20 by means of a grill 30 parallel to the top wall 7.

According to an important aspect of the present invention, on a plane top area 31 of the portion 24 of the bottom base 6, there are made, in circular sequence, orifices 32 closed towards the reserve space 3 by a non-return valve 33 made of elastomeric material designed to enable draining into the tank 2 of the liquid particles of fuel that have accumulated in the sump 25. The valve 33 (see Figure 2) has a substantially umbrella-like shape and comprises integrally a concave disk 34 and a stem 35, constrained by interference fit in a hole 36 of the portion 24, situated at the centre of the orifices 32. The disk 34 has its concavity facing the inside of the casing 4 and comprises a circular peripheral lip-seal portion 37 external to the radial envelopes of the orifices 32. The stem 35 comprises an engagement portion 38, coupled with the hole 36 and delimited, on opposite sides, by a bottom portion 39, which bears upon the top 29 of the portion 24, and by a spherical swelling 40 so as to obtain a constraint that is rigid to translation between the valve 33 and the portion 24 in a direction parallel to the axis of the hole itself.

Operation of the filter device 1 is described in what follows, starting from a condition in which the sump 25 is empty. When the motor vehicle maintains a position such that the inertial forces are negligible, the inlet opening 8 is traversed only by vapours, which, once they have got past the inlet chamber 17 with ascending motion and the pipe 18 with descending motion, are directed towards the vent 10, traversing the filter 20. During passage of the vapours, the activated carbons deposited on the internal surface of the filter 20 are able to adsorb the fuel vapours, allowing only substantially pure air to traverse the vent 10 for release into the environment.

However, there may occur conditions of vehicle inclination or particular driving conditions such that a small amount of liquid fuel manages to reach and to pass beyond the first opening 15. In this case drops of fuel are found at the top end of the conduit 18, which they traverse by gravity in the direction of its bottom end, where the storage sump 25 is located.

Said sump 25 communicates via the orifices 32 with the tank 2 through the valve 33. The fuel that has accumulated in the sump 25 exerts on the disk 34 of the valve 33 and on the lip portion 37 a hydrostatic pressure directly proportional to its own level.

Initially, this pressure is contrasted by the elastic reaction of the disk 34, and the lip portion 37 is kept in contact with the top area 31 of the portion 24, isolating the sump 25 from the reserve space 3. However, once a maximum level L has been exceeded, the resultant of the pressure exerted is such as to deform the lip portion 37, separating it from the top area 31 and enabling the fuel to flow out of the storage sump 25 directly into the tank 2. It is consequently possible to proceed in such a way that, inside the sump 25, the fuel will never exceed the maximum level L, which can be determined in the design stage by accordingly sizing the draining valve 33.

From an examination of the characteristics of the filter device 1 built according to the present invention, the advantages that it makes possible emerge clearly.

In particular, valve 33 allows to automatically drain back into the tank 2 the fuel that may collect in the sump 25 further to sharp accelerations or decelerations of the vehicle, so preventing saturation of the activated-carbon filter 20 .

In addition, it is possible to determine previously the maximum level of the fuel inside the sump 25, thus limiting the overall dimensions of the latter.

Finally, it is clear that modifications and variations can be made to the filter device 1 described and illustrated herein, without thereby departing from the scope of protection of the present invention.

In particular, considered as forming part of the invention is an elastic draining valve with pre-load that can be appropriately calibrated, constituted for example by a spring which, in order to provide a seal, pushes a ball against an orifice of the truncated-pyramid portion 24 of the bottom wall 6 and is supported by a mobile insert, for example, a screw-type insert.

In addition, the opening of the draining valve could be governed by a remote-control system.

## Claims

1. A filter device (1) for filtering the fuel vapours of a tank (2) of a motor vehicle, having an inlet opening (8) which communicates with the inside of said tank (7), and a vent (10) which communicates with the external environment, and comprising a liquid separator (21) connected to said inlet opening (8), an accumulation area (25) for particles of fuel coming from said liquid separator (21), and a filter (20), which is set downstream of said area of accumulation (25) with respect to the flow of the fuel vapours and is connected to said vent (10), said filter device comprising draining means (33) for draining said fuel present inside said accumulation area (25) into said tank (2), **characterised by** comprising a casing (4) having a bottom base (6) provided with said inlet opening (8) and a top wall (7) provided with said vent (10), lateral walls (5) and internal walls (13, 14) defining with said bottom base (6), top wall (7) and lateral walls (5) an inlet chamber (17) communicating with the tank (2) via said inlet opening (8), a seat (19) for said filter (20) and an intermediate conduit (18) connected to said inlet chamber (17) via a first opening (15) in the proximity of the top wall (7) and to said seat (19) via a second opening (16) in the proximity of the bottom base (6) and forming part of said liquid separator (21), said interface element being defined by said bottom base (6) of said casing (4), said sump (25) being located below said conduit (18) and said seat (19).

2. A filter device as claimed in Claim 1, **characterized by** being comprised inside said tank (2).

3. The filter device according to Claim 1 or Claim 2, **characterized in that** said draining means comprise a non-return valve (33).

4. A filter device as claimed in Claim 3, **characterised in that** said accumulation area is a sump (25) defined by a portion (24) of an interface element (6) between said filter device (1) and said tank (2), said portion (24) of said interface element (6) being provided with at least a through opening (32), said non-return valve selectively sealing said through opening (32).

5. A filter as claimed in any of the preceding claims, **characterized in that** said filter (20) is supported on top of said portion (24) defining said sump (25) by a multiplicity of projections (28) coming out therefrom.

6. A filter device as claimed in any of Claims 3 to 5, **characterized in that** said non-return valve (33) is made of a single piece of elastomeric material.

7. A filter device according as claimed in Claim 6, **characterized in that** said non-return valve (33) comprises a seal portion (34) with a flexible lip (37) co-operating with said interface element (24) between said device (1) and said tank (2), said interface element being provided with a plurality of orifices (32) facing said flexible lip (37).

8. A filter as claimed in claim 7, **characterised in that** said non-return valve (33) is an umbrella valve.

9. A filter device as claimed in any one of the preceding claims, **characterized in that** said filter (20) is of the activated-carbon type.

## Patentansprüche

1. Filtervorrichtung (1) zum Filtern der Kraftstoffdämpfe eines Tanks (2) eines Kraftfahrzeugs mit einer Einlassöffnung (8), die mit dem Inneren des Tanks (2) in Verbindung steht, und einer Lüftung (10), die mit der Außenumgebung in Verbindung steht, und umfassend eine Flüssigkeitstrenneinrichtung (21), die mit der Einlassöffnung (8) verbunden ist, einen Akkumulationsbereich (25) für Teilchen von Kraftstoff, die von der Flüssigkeitstrenneinnchtung (21) kommen, und ein Filter (20), das stromabwärts von dem Bereich einer Akkumulation (25) mit Bezug auf den Strom der Kraftstoffdämpfe eingebaut ist und mit der Lüftung (10) verbunden ist, wobei die Filtervorrichtung Ablasseinrichtungen (33) umfasst, um den Kraftstoff, der im Innern des Akkumulationsbereichs (25) vorhanden ist, in den Tank abzulassen, **gekennzeichnet durch** Umfassen eines Gehäuses (4), das aufweist; eine untere Basis (6), die mit der Einlassöffnung (8) versehen ist, und eine obere Wand (7), die mit der Lüftung (10) versehen ist, seitliche Wände (5) und innere Wände (13, 14), die mit der unteren Basis (6), oberen Wand (7) und seitlichen Wänden (5) eine Einlasskammer (17) begrenzen, die mit dem Tank (2) über die Einlassöffnung (8) in Verbindung steht, einen Sitz (19) für das Filter (20) und einen dazwischenliegenden Leitungskanal (18), der mit der Einlasskammer (17) über eine erste Öffnung (15) in der Nähe der oberen Wand (7) und mit dem Sitz (19) über eine zweite Öffnung (16) in der Nähe der unteren Basis (6) verbunden ist und einen Teil der Flüssigkeitstrenneinrichtung (21) bildet, wobei das Grenzflächenelement **durch** die untere Basis (6) des Gehäuses (4) begrenzt wird, wobei das Auffangbecken (25) unter dem Leitungskanal (18) und dem Sitz (19) angeordnet ist.

2. Filtervorrichtung nach Anspruch 1, **dadurch gekennzeichnet, dass** sie im Innern des Tanks (2) enthalten ist.

3. Filtervorrichtung nach Anspruch 1 oder Anspruch 2, **dadurch gekennzeichnet, dass** die Ablasseinrichtungen ein Rückschlagventil (33) umfassen.

4. Filtervorrichtung nach Anspruch 3, **dadurch gekennzeichnet, dass** der Akkumulationsbereich ein Auffangbecken (25) ist, das durch einen Teil (24) eines Grenzflächenelements (6) zwischen der Filtervorrichtung (1) und dem Tank (2) begrenzt wird, wobei der Teil (24) des Grenzflächenelements (6) mit mindestens einer Durchgangsöffnung (32) versehen ist, wobei das Rückschlagventil die Durchgangsöffnung (32) selektiv dichtet.

5. Filter nach einem der vorangehenden Ansprüche, **dadurch gekennzeichnet, dass** das Filter (20) oben auf dem das Auffangbecken (25) begrenzenden Teil (24) durch eine Vielzahl von Vorsprüngen (28) getragen wird, die davon hervorkommen.

6. Filtervorrichtung nach einem der Ansprüche 3 bis 5, **dadurch gekennzeichnet, dass** das Rückschlagventil (33) aus einem einzigen Stück von elastomerem Material hergestellt ist.

7. Filtervorrichtung nach Anspruch 6, **dadurch gekennzeichnet, dass** das Rückschlagventil (33) einen Dichtungsteil (34) mit einer flexiblen Lippe (37) umfasst, die mit dem Grenzflächenelement (24) zwischen der Vorrichtung (1) und dem Tank (2) zusammenwirkt, wobei das Grenzflächenelement mit einer Mehrzahl von Durchgangsöffnungen (32) versehen ist, die der flexiblen Lippe (37) gegenüberliegen.

8. Filter nach Anspruch 7, **dadurch gekennzeichnet, dass** das Rückschlagventil (33) ein Schirmventil ist.

9. Filtervorrichtung nach einem der vorangehenden Ansprüche, **dadurch gekennzeichnet, dass** das Filter (20) vom Aktivkohletyp ist.

## Revendications

1. Dispositif de filtre (1) pour filtrer les vapeurs de carburant d'un réservoir (2) d'un véhicule à moteur, comportant une ouverture d'admission (8) qui communique avec l'intérieur dudit réservoir (2), et une mise à l'air libre ou évent (10) qui communique avec l'environnement extérieur, et comprenant un séparateur de liquide (21) raccordé à ladite ouverture d'admission (8), une aire d'accumulation (25) pour les particules de carburant provenant dudit séparateur de liquide (21), et un filtre (20), qui est monté en aval de ladite aire d'accumulation (25) par rapport à l'écoulement des vapeurs de carburant et est raccordé à ladite mise à l'air libre (10), ledit dispositif de filtre comprenant des moyens d'évacuation ou de drainage (33) pour évacuer ledit carburant présent à l'intérieur de ladite aire d'accumulation (25) dans ledit réservoir (2), **caractérisé en ce qu'**il comprend un boîtier (4) ayant une base inférieure (6) pourvue de ladite ouverture d'admission (8) et une paroi supérieure (7) pourvue de ladite mise à l'air libre (10), des parois latérales (5) et des parois internes (13, 14) définissant avec lesdites base inférieure (6), paroi supérieure (7) et parois latérales (5) une chambre d'admission (17) communiquant avec le réservoir (2) par ladite ouverture d'admission (8), un siège (19) pour ledit filtre (20) et un conduit intermédiaire (18) raccordé à ladite chambre d'admission (17) par une première ouverture (15) à proximité de la paroi supérieure (7) et audit siège (19) par une seconde ouverture (16) à proximité de la base inférieure (5) et faisant partie dudit séparateur de liquide (21), ledit élément formant interface étant défini par ladite base inférieure (6) dudit boîtier (4), ledit collecteur (25) étant situé au-dessous dudit conduit (18) et dudit siège (19).

2. Dispositif de filtre selon la revendication 1, **caractérisé en ce qu'**il est compris à l'intérieur dudit réservoir (2).

3. Dispositif de filtre selon la revendication 1 ou 2, **caractérisé en ce que** lesdits moyens d'évacuation comprennent une valve anti-retour (33).

4. Dispositif de filtre selon la revendication 3, **caractérisé en ce que** ladite aire d'accumulation est un collecteur (25) défini par une partie (24) d'un élément formant interface (6) entre ledit dispositif de filtre (1) et ledit réservoir (2), ladite partie (24) dudit élément formant interface (6) étant pourvue d'au moins une ouverture de passage (32), ladite valve anti-retour obturant de manière étanche sélectivement ladite ouverture de passage (32).

5. Dispositif de filtre selon l'une quelconque des revendications précédentes, **caractérisé en ce que** ledit filtre (20) est supporté au-dessus de ladite partie (24) définissant ledit collecteur (25) par plusieurs projections (28) provenant ou dépassant de celui-ci.

6. Dispositif de filtre selon l'une quelconque des revendications 3 à 5, **caractérisé en ce que** ladite valve anti-retour (33) est fabriquée en une seule pièce de matériau thermoplastique.

7. Dispositif de filtre selon la revendication 6, **caractérisé en ce que** ladite valve anti-retour (33) comprend une partie d'étanchéité (34) comportant une lèvre souple (37) coopérant avec ledit élément formant interface (24) entre ledit dispositif (1) et ledit réservoir (2), ledit élément formant interface étant pourvu d'une pluralité d'orifices (32) orientés vers ladite lèvre souple (37).

8. Filtre selon la revendication 7, **caractérisé en ce que** ladite valve anti-retour (33) est une valve parapluie.

9. Dispositif de filtre selon l'une quelconque des revendications précédentes, **caractérisé en ce que** ledit filtre (20) est du type charbon activé.
